# FASCICULE DE BREVET EUROPEEN

(11) **EP 0 816 267 B1**
(45) Date de publication et mention de la délivrance du brevet: **16.01.2002**
(21) Numéro de dépôt: 97401518.2
(22) Date de dépôt: 30.06.1997
(51) Int. Cl.: B65G 59/06

(54) **Dispositif d'éjection d'articles empilés dans un magasin et système de distribution automatique d'articles de magasins comprenant chacun un dispositif d'éjection d'articles du magasin**
Ejektor für gestapelte Gegenstände in Magazinen und automatisches Abgabesystem für Gegenstände aus Magazinen mittels einem Ejektor für Gegenstände aus Magazinen
Ejection device for articles stacked in a magazine and automatic distribution-system for articles from a magazine equipred with an ejection device for articles from a magazine

(30) Priorité: 05.07.1996 FR 9608429
(43) Date de publication de la demande: 07.01.1998
(73) Titulaire: Société Nationale D'Exploitation Industrielle Des Tabacs et Allumettes S.E.I.T.A., 75007 Paris (FR)
(72) Inventeur: Gouy, Jean-Claude, 69009 Lyon (FR)
(74) Mandataire: Thinat, Michel

(56) Documents cités:
- EP-A- 0 037 989
- DE-A- 4 443 553
- FR-A- 2 285 321
- GB-A- 1 521 823

## Description

La présente invention concerne un dispositif d'éjection d'articles empilés dans un magasin ainsi qu'un système de distribution automatique d'articles pour la préparation de commandes utilisant un tel dispositif d'éjection.

On connaît par le brevet français N° 2 524 867 un tel dispositif d'éjection comprenant un éjecteur situé sous le magasin d'articles empilés et agencé de façon à éjecter du magasin l'article le plus bas de la pile d'articles.
Un tel dispositif est aussi connu par le document DE 44 43 553 A.

Cependant, ce dispositif d'éjection connu a pour inconvénients d'être d'une structure relativement complexe exigeant un assemblage précis des différents éléments le constituant et d'occasionner un frottement sur toute la surface de contact entre l'article le plus bas et l'article adjacent le chevauchant lors de l'éjection du magasin de l'article le plus bas, risquant ainsi d'abîmer les articles notamment lorsque ceux-ci sont enveloppés dans une feuille d'emballage relativement fragile.

La présente invention a pour but d'éliminer les inconvénients ci-dessus des dispositifs d'éjection connus en proposant un dispositif d'éjection d'une structure extrêmement simple, peu coûteux et n'abîmant pas les articles lors de leur éjection du magasin dans lequel ils sont empilés.

A cet effet, selon l'invention, le dispositif d'éjection d'articles empilés dans un magasin sensiblement vertical, comprenant un éjecteur situé sous le magasin de façon à éjecter de celui-ci l'article le plus bas de la pile d'articles, est caractérisé en ce que l'éjecteur comprend un support fixe de l'article le plus bas à surface supérieure plane horizontale comportant une ouverture centrale à deux bords rectilignes parallèles opposés d'étendue supérieure à la projection apparente horizontale de chaque article et disposée obliquement relativement aux articles empilés de façon que l'article le plus bas repose sur deux portions de surface plane du support qui est distant du magasin de façon que l'article le plus bas soit complètement sorti du magasin ; et un moyen de commande du pivotement sur lui-même de l'article le plus bas reposant sur les deux portions de surface plane du support à une position parallèle aux deux bords rectilignes de l'ouverture centrale à travers laquelle cet article tombe par gravité.

Le dispositif d'éjection comprend également un moyen permettant de retenir dans le magasin l'article de la pile d'articles situé adjacent au-dessus de l'article le plus bas de cette pile lorsque le moyen de commande provoque le pivotement sur lui-même de l'article le plus bas et de libérer l'article adjacent après éjection, par le moyen de commande, de l'article le plus bas à travers l'ouverture centrale du support afin que l'article adjacent puisse tomber par gravité en appui sur les deux portions de surface plane du support.

De préférence, le support comprend deux bras rectilignes fixes parallèles sensiblement de même longueur disposés obliquement par rapport aux articles empilés dans le magasin et dont leurs faces latérales verticales internes mutuellement en regard définissent respectivement les deux bords rectilignes opposés de l'ouverture précitée et le moyen de commande comprend deux barres longitudinales parallèles sensiblement de même longueur reliées entre elles à une extrémité par une biellette de façon articulée et montées pivotantes respectivement sur les deux bras de support par un point intermédiaire situé au même emplacement sur les deux barres, de telle façon que, lorsque les deux barres sont parallèles aux deux bras de support, leurs faces latérales verticales internes mutuellement en regard soient respectivement en affleurement aligné avec les faces latérales verticales des deux bras de support pour permettre la chute par gravité de l'article le plus bas à travers l'ouverture centrale, et qu'en toute autre position pivotée et selon le sens de pivotement, les deux barres laissent découvertes respectivement deux portions de surface plane des deux bras de support correspondant aux deux portions précitées de support de l'article le plus bas, une portion de surface étant située d'un côté du pivot d'une barre tandis que l'autre portion de surface, diagonalement opposée, est située de l'autre côté du pivot de l'autre barre.

De préférence, le moyen de retenue et de libération précité est constitué par les deux barres pivotantes qui sont montées sous le magasin de façon qu'en pivotant vers leur position parallèle aux deux bras de support, l'article situé adjacent au-dessus de l'article le plus bas soit maintenu dans le magasin en appui par gravité sur deux portions de surface plane supérieures diagonalement opposées respectivement des deux barres pivotantes et qu'en ramenant les deux barres pivotantes à leur position oblique au-dessus des deux bras de support, l'article adjacent tombe par gravité entre les deux barres pivotantes pour venir en appui sur les deux portions de surface plane des deux bras de support.

Le magasin comprend deux parois latérales rigides d'une largeur légèrement supérieure à la dimension des articles empilés logés entre les deux plaques latérales de façon à empêcher le pivotement sur eux-mêmes des articles empilés lorsque le moyen de commande précité provoque le pivotement sur lui-même de l'article le plus bas.

Les deux parois latérales du magasin sont fixées amoviblement à un rail fixe d'un bâti à des emplacements choisis de ce rail de façon à régler la largeur du magasin en fonction de la taille des articles à empiler dans le magasin.

Selon une variante de réalisation, l'une des parois latérales du magasin est fixée amoviblement à un rail fixe d'un bâti et l'autre paroi latérale de celui-ci est montée mobile de façon commandée suivant une direction perpendiculaire à la paroi fixe de façon à permettre son déplacement, à partir de sa position de formation du magasin, à une position éloignée de la paroi latérale fixe de réception d'une pile d'articles et son retour vers la paroi latérale fixe pour charger la pile d'articles sur les articles restants du magasin.

Avantageusement, la paroi latérale mobile du magasin comprend une plaque fixée à l'arrière de cette paroi, correspondant à l'arrière du magasin, perpendiculairement à l'extérieur de celle-ci et servant, lorsque la paroi mobile est en position de formation du magasin, de butée de retenue de piles d'articles de stockage successivement alignées en contact les unes aves les autres et reposant sur une voie de roulement inclinée de haut en bas vers l'avant du magasin et sensiblement parallèle aux parois du magasin en s'étendant approximativement jusqu'à l'avant de celui-ci à un niveau permettant à la paroi mobile ayant reçu une pile d'articles de transférer cette pile de la partie correspondante de la voie de roulement sur les articles restants du magasin.

La paroi latérale mobile comprend également une autre plaque fixée perpendiculairement à l'intérieur de celle-ci à une emplacement déterminé permettant à une pile d'articles, initialement retenue par la plaque fixe externe de la paroi mobile en position de formation du magasin, de venir en butée par glissement sur la voie de roulement contre la plaque interne de la paroi mobile en position éloignée de la paroi fixe à une position permettant le transfert de la pile d'articles transversalement à la voie de roulement vers la paroi fixe du magasin avec maintien concomitant lors de ce transfert des piles d'articles stockées sur la voie de roulement en appui contre la plaque externe de la paroi mobile.

Les piles d'articles sont guidées bilatéralement sur la voie de roulement qui comprend au moins une série de rouleaux montés fous parallèles et transversaux aux parois du magasin.

De préférence, la paroi mobile est montée coulissante sur deux axes fixes parallèles de guidage s'étendant au-dessus du magasin transversalement aux parois de celui-ci et le moyen de commande du déplacement de la paroi mobile comprend un vérin dont le cylindre est fixe et la tige est reliée articulée à la paroi mobile.

De préférence, le moyen de commande du pivotement des deux barres pivotantes comprend un vérin dont le cylindre est fixe et la tige est reliée articulée à l'une des deux barres à l'opposé de la biellette de liaison de celles-ci.

Le dispositif comprend également un détecteur monté sur la paroi mobile du magasin et fournissant un signal électrique destiné à commander le déplacement de la paroi mobile pour le rechargement du magasin en pile d'articles lorsque le détecteur détecte que la pile d'articles du magasin a atteint une hauteur limite inférieure.

L'invention propose également un système de distribution automatique d'articles pour la préparation d'une ou plusieurs commandes de tels articles, comprenant un certain nombre de magasins contenant respectivement des piles d'articles à distribuer, des dispositifs d'éjection situés respectivement sous les magasins pour éjecter de' chaque magasin l'article le plus bas de chaque pile d'articles et un convoyeur disposé sous les dispositifs d'éjection pour collecter des articles délivrés par ceux-ci et les acheminer vers un emplacement de collecte et qui est caractérisé en ce que chaque dispositif d'éjection est d'une structure et d'un fonctionnement tels que définis précédemment.

Avantageusement, le système de distribution automatique comprend un dispositif ordinateur permettant de sélectivement commander les dispositifs d'éjection par l'intermédiaire de cartes électroniques associées respectivement aux magasins pour éjecter de ceux-ci des quantités déterminées d'articles souhaités suivant des commandes passées et mémorisées dans le dispositif ordinateur.

Ce système de distribution comprend plusieurs couloirs parallèles de stockage de piles d'articles différents associés respectivement aux magasins et comprenant chacun une voie de roulement inclinée de haut en bas vers le magasin correspondant de façon à diriger les piles successives d'articles par glissement sur la voie de roulement vers la paroi mobile du magasin permettant le rechargement automatique de celui-ci.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant deux modes de réalisation de l'invention et dans lesquels :

La figure 1 est une vue de face de magasins d'articles empilés associés respectivement à des dispositifs d'éjection de ceux-ci des articles empilés et faisant partie d'un système de distribution automatique d'articles.

La figure 2 est une vue de face en contre-plongée d'un magasin d'articles empilés et de son dispositif d'éjection associé.

La figure 3 est une vue de côté suivant la flèche III du magasin de la figure 2 sans article dans celui-ci.

La figure 4 est une vue de dessus du dispositif d'éjection de l'invention en position de support de l'article le plus bas d'une pile d'articles empilés dans le magasin correspondant.

La figure 5 est une vue de dessus semblable à celle de la figure 4 et représentant le dispositif d'éjection en position d'éjection de l'article le plus bas.

La figure 6 est une vue en perspective représentant un deuxième mode de réalisation d'un magasin et de son dispositif d'éjection associé suivant l'invention.

La figure 7 est une vue schématique de dessus suivant la flèche VII de la figure 6 avec une paroi mobile du magasin en position de formation de celui-ci.

La figure 8 est une vue de dessus semblable à celle de la figure 7 et représentant la paroi mobile du magasin en position de transfert d'une pile d'articles dans ce magasin.

La figure 9 est une vue partielle en perspective agrandie suivant la flèche IX de la figure 7 et montrant un détecteur d'articles dans le magasin.

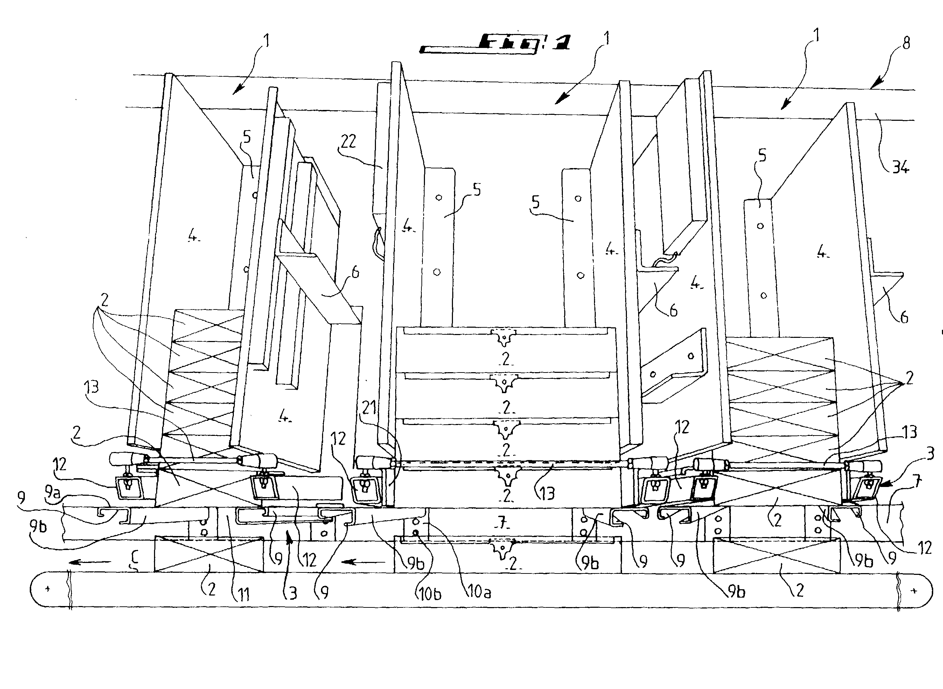

La figure 1 représente trois magasins adjacents 1 situés à un même niveau horizontal et faisant partie d'une série horizontale de magasins d'un système de distribution automatique d'articles 2 empilés dans chacun des magasins 1 pour la préparation de commandes de tels articles, par exemple par des clients.

Dans le cas présent, les articles considérés sont constitués par des emballages sensiblement parallèlépipédiques ou cylindriques de paquets de cigarettes ou par des boîtes ou des coffrets de cigares, mais il est bien entendu que ces articles peuvent également être constitués par des livres, des boîtiers à cassettes audio, des boîtiers à compact disques, des palettes ou d'autres types d'articles.

Les magasins 1 d'une rangée ont des largeurs différentes de façon à stocker des articles 2 de dimensions différentes comme cela est montré clairement en figure 1.

Sous les magasins 1 sont disposés respectivement des dispositifs d'éjection automatique 3 des articles 2 des magasins 1 sur un dispositif convoyeur à bande sans fin C situé en dessous des dispositifs d'éjection 3 et qui achemine les articles éjectés vers un emplacement de collecte (non représenté).

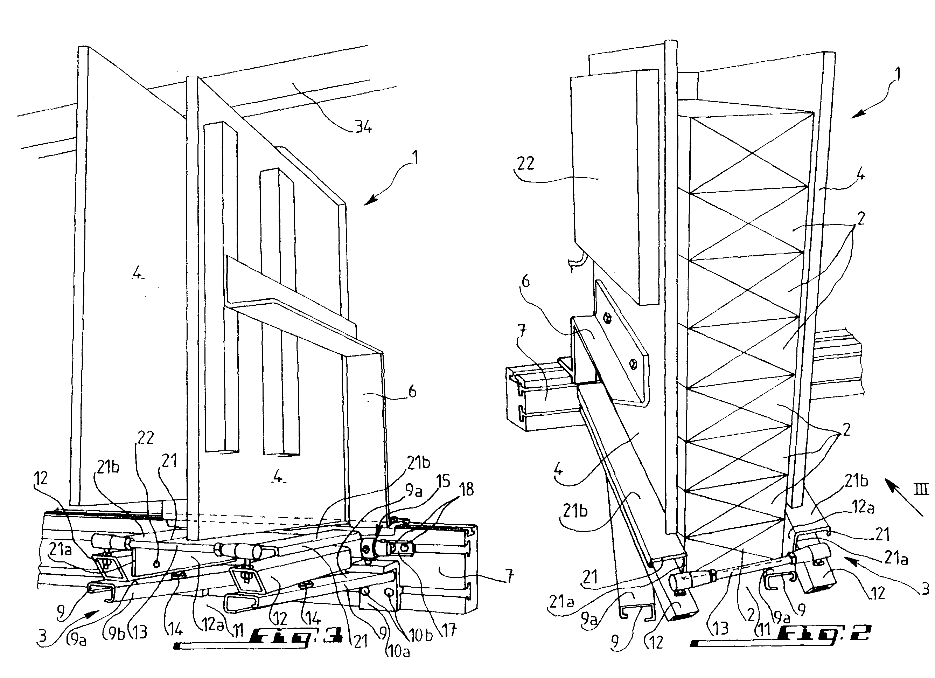

En se reportant également aux figures 2 à 5, selon l'invention, chaque magasin 1 est formé par deux parois latérales 4 situées respectivement dans deux plans verticaux et dont les bords avant respectifs sont légèrement inclinés en arrière de façon que les articles empilés dans le magasin 1 soient en appui sur deux plaques internes de retenue 5 formant l'arrière du magasin 1 et fixées respectivement au niveau des deux bords arrière des parois 4 perpendiculairement à celles ci en regard l'une de l'autre.

Les deux parois 4 du magasin 1 sont chacune fixées, par l'intermédiaire d'une équerre de fixation 6, à un rail métallique longitudinal inférieur 7 d'un bâti de support 8 du système de distribution. Chaque paroi 4 du magasin 1 peut être fixée à tout emplacement choisi du rail 7, par exemple par des vis de fixation, de façon à régler la largeur du magasin 1 suivant les dimensions ou la taille des articles à empiler dans celui-ci, cette largeur étant légèrement supérieure à la dimension de ces articles.

Le dispositif d'éjection 3 situé sous chaque magasin 1 est agencé de façon à éjecter de celui-ci l'article 2 le plus bas de la pile d'articles du magasin.

A cet effet, le dispositif d'éjection 3 comprend un support fixe de l'article le plus bas 2 de préférence constitué par deux bras rectilignes parallèles sensiblement de même longueur 9, fixés au rail inférieur 7, par exemple par des équerres 10a et des vis de fixation 10b, et disposés obliquement par rapport au rail 7 et aux parois 4 du magasin qui sont perpendiculaires au rail 7; autrement dit, les deux bras de support 9 s'étendent obliquement relativement aux articles empilés 2 dans le magasin 1.

Les deux bras de support 9 ont leurs faces supérieures planes respectives 9a situées dans un même plan horizontal de façon à constituer une surface plane horizontale de support de l'article 2 le plus bas. Les faces latérales verticales internes mutuellement en regard 9b des deux bras de support 9 définissent respectivement deux bords rectilignes parallèles opposés d'une ouverture centrale 11 d'une largeur déterminée par la distance séparant les deux bras 9 et d'une étendue supérieure à la projection apparente horizontale des articles 2 empilés dans le magasin 1. Ainsi, l'ouverture 11 définie entre les deux bras de support 9 est disposée obliquement relativement aux articles empilés 2.

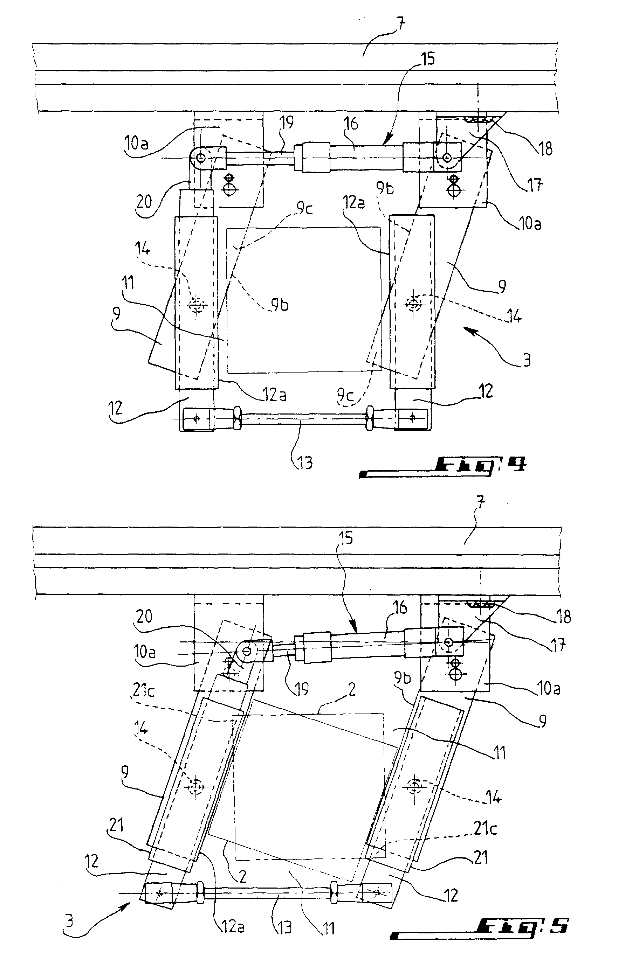

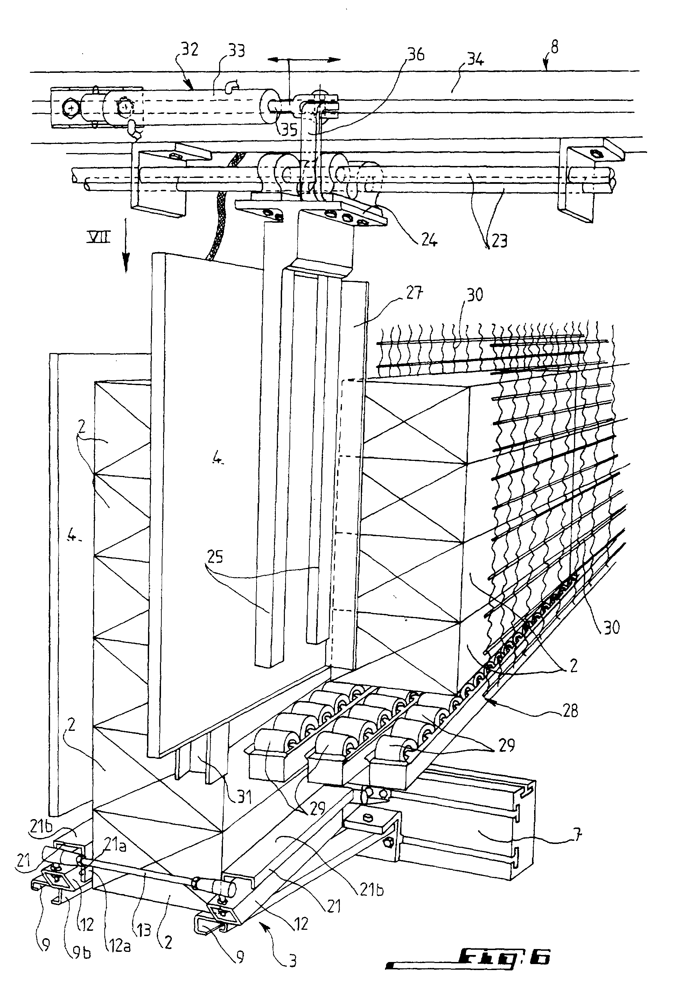

L'article le plus bas 2 repose sur deux portions de surface plane 9c (figure 4) diagonalement opposées respectivement des deux bras de support 9, l'une des portions 9c d'un bras 9 étant située du côté du rail inférieur 7 tandis que l'autre portion de surface 9c de l'autre bras 9 est située à l'opposé de ce rail.

Les deux bras de support 9 sont situés en dessous du magasin 1 à une distance de celui-ci telle que l'article le plus bas 2 en appui sur les bras 9 est complètement sorti du magasin 1 et les articles 2 empilés au-dessus de cet article le plus bas sont bilatéralement maintenus par les deux parois latérales 4 du magasin 1 de façon à empêcher tout pivotement autour d'eux-mêmes des articles 2 empilés sur l'article le plus bas.

Le dispositif d'éjection 3 comprend également un mécanisme de commande du pivotement sur lui-même de l'article le plus bas 2 à partir de sa position de repos sur les deux portions de surface plane 9c des bras de support 9 à une position parallèle aux deux faces latérales verticales 9b de ces bras de façon à faire tomber par gravité cet article à travers l'ouverture centrale 11.

De préférence, ce mécanisme de commande comprend deux barres longitudinales parallèles sensiblement de même longueur 12 reliées entre elles à une extrémité opposée au rail inférieur 7 par une biellette 13 de façon articulée afin de constituer un parallélogramme déformable dont seul l'un des côtés à proximité du rail inférieur 7 est manquant.

Les deux barres 12 sont montées pivotantes respectivement sur les deux bras de support 9 par un axe de pivotement 14 solidaire du bras correspondant 9 perpendiculairement à celui-ci, les deux axes 14 étant situés au même emplacement respectivement sur les deux barres pivotantes 12.

Le mécanisme de commande comprend également un élément de commande du pivotement des deux barres pivotantes 12 et constitué de préférence par une vérin hydraulique ou pneumatique à double effet 15 dont le cylindre 16 est fixé au rail inférieur 7 par l'intermédiaire d'un étrier 17 et de vis de fixation 18 et la tige de commande 19 est reliée articulée à une extension 20 de l'une des barres pivotantes 12 du côté du rail inférieur 7.

Le vérin de commande 15 est piloté de manière que la tige 19 occupe normalement une position sortie du cylindre 16 de façon que les deux barres pivotantes 12 soient sensiblement perpendiculaires au rail 7 (figure 4) et laissent découvertes respectivement les deux portions de surface plane 9c des deux bras de support 9 de l'article le plus bas 2, une portion de surface 9c pouvant également être définie comme étant située d'un côté de l'axe de pivotement 14 d'une barre 12 tandis que l'autre portion de surface 9c, diagonalement opposée, est située de l'autre côté de l'axe de pivotement 14 de l'autre barre 12. A la position perpendiculaire des barres pivotantes 12 au rail 7, les faces latérales verticales internes mutuellement en regard 12a de ces barres sont situées de part et d'autre, avec jeu, de l'article le plus bas 2 en faisant face chacune à la paroi latérale correspondante de cet article reposant sur les deux bras de support 9.

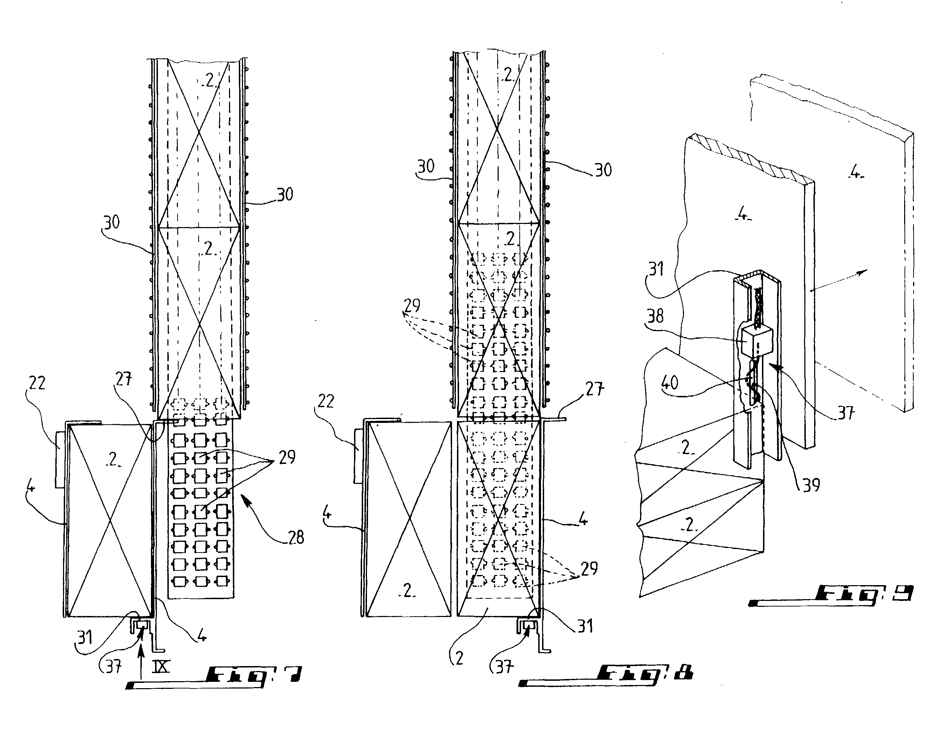

Lorsque le vérin 15 est piloté de façon que la tige de commande 19 soit rentrée dans le cylindre 16, les deux barres pivotantes 12 sont disposées parallèlement aux deux bras de support 9 au-dessus de ceux-ci avec leurs faces latérales verticales 12a respectivement en affleurement aligné avec les faces latérales verticales 9b des deux bras de support 9 pour permettre la chute par gravité de l'article le plus bas 2 à travers l'ouverture centrale 11 (figure 5).

Comme cela ressort également des figures 1 à 5, chaque barre pivotante 12 est pourvue d'une pièce en équerre 21 fixée à la barre 12 par des vis de fixation 22, dont une seule est représentée en figure 3, de façon que l'une des ailes planes 21a de la pièce 21 constitue la face latérale interne 12a de la barre 12 et l'autre aile plane perpendiculaire et horizontale 21b soit située à une certaine distance au-dessus de la barre 12.

Lors du pivotement par le vérin de commande 15 des barres pivotantes 12 vers leur position parallèle aux bras de support 9, l'article le plus bas 2 pivote sur lui-même autour d'un axe vertical passant par son centre de gravité tandis que les autres articles empilés 2 au-dessus de celui-ci sont immobilisés en rotation dans le magasin 1 par les deux parois latérales 4. Lorsque les deux barres pivotantes 12 commencent à pivoter vers cette position parallèle aux bras 9, l'article 2 situé juste au-dessus de l'article le plus bas à éjecter est maintenu en position dans le magasin 1 par les deux ailes 21b respectivement des deux pièces rapportées 21 en venant en appui par gravité sur deux portions de surface plane horizontales diagonalement opposées 21c situées sensiblement en aplomb respectivement des deux portions de surface plane 9c des deux bras de support 9 lorsque les barres 12 sont parallèles aux bras 9. La figure 5 montre en traits mixtes l'article 2 reposant sur les portions de surface 21c des pièces rapportées 21 avec l'article le plus bas 2 en train de chuter à travers l'ouverture 11. Lorsque les deux barres 12 sont ramenées de leur position parallèle aux bras de support 9 à laquelle l'article le plus bas est éjecté à leur position sensiblement perpendiculaire au rail 7, l'article 2 qui était situé juste au-dessus de cet article le plus bas éjecté est désengagé des deux portions de surface plane 21c des deux ailes 21a de la pièce rapportée 21 et tombe par gravité dans l'espace défini entre les deux barres 12 pour venir en appui sur les deux portions de surface planes 9c des barres de support 9 afin d'être prêt pour un nouveau cycle d'éjection.

A chaque magasin 1 est associée une carte électronique de commande 22 fixée à l'extérieur de l'une des parois latérales 4 du magasin et comprenant les différents circuits électroniques permettant de piloter cycliquement le vérin de commande 15 de pivotement des barres 12. Les différentes cartes électroniques 22 peuvent être reliées à un dispositif ordinateur (non représenté) reçevant plusieurs commandes d'articles différents déterminés de clients, mémorisant les informations relatives aux commandes passées et transmettant ces informations aux cartes électroniques appropriées qui commandent les dispositifs d'éjection correspondants 3 pour éjecter du magasin 1, suivant la quantité souhaitée, les articles commandés.

Le fonctionnement de chaque dispositif d'éjection d'articles résulte de la description qui en a été faite ci-dessus et n'a donc pas à être à nouveau détaillé. On signalera cependant que chaque vérin de commande 15 peut être piloté par la carte électronique 22 et son distributeur hydraulique ou pneumatique associé de façon que le pivotement sur lui-même par les barres pivotantes 12 de chaque article le plus bas 2 s'effectue à une cadence telle que plusieurs articles peuvent tomber par seconde sur le convoyeur 4. De plus, le pivotement dans le sens des aiguilles d'une montre des barres pivotantes 12 pour faire tomber par gravité chaque article le plus bas 2 est limité à une valeur angulaire relativement faible, de l'ordre de 10 à 15°, de sorte que la zone de frottement durant ce pivotement entre l'article le plus bas à éjecter et l'article adjacent situé au-dessus de celui-ci est extrêmement limitée, éliminant ainsi pratiquement tout risque d'endommagement de ces articles, notamment lorque ceux-ci ont un emballage relativement fragile. Le dépilage d'articles 2 du magasin 1 convient non seulement à des articles ayant au moins une surface de base rigide, mais également à des articles mous ne se déformant pratiquement pas sous le poids exercé sur l'article le plus bas par l'empilement d'articles.

Les figures 6 à 9 représentent une variante de réalisation des magasins 1 d'un système de distribution qui, contrairement au mode de réalisation précédemment décrit selon lequel chaque magasin 1 est rechargé ou rempli d'articles manuellement par l'avant de celui-ci, permet un rechargement automatique de chaque magasin. Le système de distribution automatique d'articles peut bien entendu comporter une rangée de magasins à rechargement manuel et une autre rangée indépendante de magasins à rechargement automatique ou au moins une rangée de magasins à chargement fixe et à chargement automatique.

Pour permettre le chargement automatique d'un magasin 1, l'une des parois latérales 4 de celui-ci est fixée amoviblement au rail inférieur 7 comme dans le précédent mode de réalisation, tandis que l'autre paroi latérale 4 de ce magasin est montée coulissante de façon commandée sur deux axes fixes parallèles de guidage 23 situés dans un même plan horizontal au-dessus du magasin en s'étendant transversalement aux parois 4 de celui-ci, de sorte que la paroi mobile 4 peut se déplacer suivant une direction perpendiculaire à la paroi latérale fixe 4 de sa position de formation du magasin 1 à une position éloignée de la paroi fixe 4 à laquelle la paroi mobile 4 peut recevoir une nouvelle pile d'articles 2 et retourner vers à sa position de formation du magasin en transférant la nouvelle pile d'articles dans le magasin comme on le verra ultérieurement.

La paroi mobile 4 comporte à sa partie supérieure une platine horizontale 24 fixée à l'extérieur de la paroi 4 par deux pattes parallèles de fixation 25 solidaires de la plaque 4 et supportant deux paires de manchons parallèles 26 montés coulissant respectivement sur les deux axes de guidage 23 qui sont solidaires du bâti 8.

La paroi mobile 4 comprend également une plaque sensiblement verticale 27 solidaire de la paroi 4 à l'extrémité arrière de celle-ci, correspondant à l'arrière du magasin 1, et s'étendant à l'extérieur de cette paroi perpendiculairement à celle-ci. Lorsque la paroi mobile occupe sa position de formation du magasin dans lequel sont empilés des articles 2, la plaque 27 sert de butée de retenue de piles d'articles 2 de stockage successivement alignées en contact les unes avec les autres et reposant sur une voie de roulement 28 inclinée de haut en bas vers l'avant du magasin 1 et sensiblement parallèle aux parois latérales 4 en s'étendant approximativement jusqu'à l'avant du magasin à un niveau correspondant sensiblement à une hauteur limite inférieure d'articles empilés restants du magasin et définie, par exemple, par deux articles empilés comprenant l'article le plus bas supporté par les bras 9. La voie de roulement 28 est définie par trois séries de galets parallèles 29 montés fous et disposés transversalement aux parois 4 du magasin. De la sorte, les piles d'articles 2 stockées sur la voie de roulement 28 peuvent glisser librement par elles-mêmes vers l'avant du magasin 1 lorsque la plaque de retenue 27 est dégagée de leur trajectoire. Ces piles d'articles 2 sont guidées bilatéralement sur la voie de roulement 28 par deux grilles 30 disposées de part et d'autre de la voie roulement 28 de façon à former un couloir de stockage de piles successives d'articles 2.

La paroi mobile 4 comprend de plus une autre plaque 31 fixée perpendiculairement à l'intérieur de cette paroi par des vis de fixation à un emplacement déterminé définissant une partie de paroi frontale du magasin lorsque la paroi mobile 4 occupe sa position de formation de celui-ci de façon que les articles empilés dans le magasin viennent en butée sur la plaque 31. Afin que les articles 2 soient parfaitement empilés dans le magasin 1, il est possible d'agencer ce dernier de façon que ses parois 4 ainsi que la plaque 31 soient légère inclinées vers le bas en partant du rail 7.

Le déplacement commandé de la plaque mobile 4 est obtenu par un vérin hydraulique ou pneumatique à double effet 32 dont le cylindre 33 est solidaire d'un rail supérieur 34 du bâti 8 du système de distribution, parallèle au rail inférieur 7, et la tige 35 est reliée articulée à l'extrémité d'une patte 36 solidaire de la platine 24 de support des manchons 26. Le vérin 33 est piloté de façon qu'en position rentrée de la tige 35, la paroi mobile 4 occupe sa position de formation du magasin 1 (figure 7) et qu'en position sortie du cylindre 33, la paroi mobile 4 occupe une position éloignée de la paroi fixe 4 telle que sa face interne est sensiblement dans le prolongement des parois latérales verticales qui sont en affleurement aligné des articles empilés 2 de la pile qui était en appui sur la plaque 27 de la paroi mobile 4 et qui sont situées à l'opposé de la paroi fixe 4. Lorsque la paroi mobile 4 occupe cette position éloignée de la paroi fixe 4, la pile d'articles 2, qui était retenue par la plaque externe 27, glisse sur la voie de roulement 28 le long de la face interne de la paroi mobile 4 jusqu'à venir en appui par sa partie d'extrémité frontale correspondante sur la plaque interne 31 de la paroi mobile 4. Ensuite, le vérin 33 est piloté de manière que sa tige 35 déplace la paroi mobile 4 vers la paroi fixe 4 de façon à transférer transversalement la pile d'articles 2 reçue par la paroi mobile 4 de la voie de roulement 28 vers la paroi fixe 4 et charger ainsi cette pile d'articles 2 sur les articles empilés restants du magasin 1. Lors du déplacement de la plaque mobile 4 vers la plaque fixe 4, la pile d'articles 2 juxtaposée à la pile d'articles 2 en cours de transfert par la plaque mobile 4 vient en appui sur la plaque externe 27 en attente d'être transférée à son tour dans le magasin 1.

Le déclenchement du déplacement de la paroi mobile 4 pour recharger le magasin 1 en piles d'articles 2 est effectué par un détecteur 37 fournissant un signal électrique destiné à commander le déplacement de la paroi mobile 4 lorsque la hauteur des articles 2 empilés dans le magasin 1 atteint une valeur limite inférieure, c'est-à-dire lorsqu'il ne reste plus dans ce magasin que par exemple deux articles. Le détecteur 37 peut être constitué d'un petit boîtier 38 fixé à la plaque interne 31 sur la paroi frontale de celle-ci et d'un fil métallique élastique coudé 39 traversant une fente 40 de la plaque 31 en venant en appui sur un article, par exemple le troisième article à partir de l'article le plus bas du magasin de façon à ouvrir un contact électrique dans le boîtier 38 du détecteur 37. Lorsqu'il ne reste plus que deux articles empilés dans le magasin 1, le fil coudé s'enfonce davantage dans le magasin 1 à travers la fente 40 et ferme le contact électrique du boîtier 38 du détecteur 37 de façon à fournir le signal électrique permettant à la carte électronique 22 associée au magasin 1 de déclencher le cycle de transfert dans le magasin 1, par la paroi mobile 4, d'une pile d'articles stockée dans le couloir de guidage.

Bien entendu, le dispositif d'éjection 3 associé au magasin 1 à rechargement automatique est identique au dispositif d'éjection 3 décrit en référence au mode de réalisation précédent. De plus, les articles 2 empilés dans le magasin au-dessus de l'article le plus bas supporté par les deux bras de support 9 sont retenus dans le magasin 1 par les parois 4 de façon que l'article le plus bas puisse pivoter sur lui-même lors de la phase d'éjection relativement aux autres articles empilés sans pratiquement induire de frottement entre eux.

Lorsque le système de distribution automatique comprend une rangée de magasins 1 à rechargement automatique, plusieurs couloirs parallèles de stockage de piles d'articles différents ou non sont associés respectivement à ces magasins et comprennent chacun une voie de roulement identique à celle décrite précédemment. Chaque couloir de stockage peut être chargé manuellement ou automatiquement par un dispositif de dépilage, connu en soi, de piles d'articles contenues dans des caisses de stockage.

Le système de distribution automatique de l'invention permet la préparation de commandes à moindre coût et le dispositif d'éjection automatique d'articles associé à chaque magasin est d'une structure et d'un fonctionnement extrêmement simples. Le dispositif d'éjection réduit considérablement le frottement entre l'article empilé le plus bas du magasin et l'article situé juste au-dessus de celui-ci lors de l'éjection de cet article le plus bas. De plus, le dispositif d'éjection est facilement réglable en fonction des dimensions des articles à éjecter du fait que les bras de support des articles sont amoviblement fixés sur le bâti à des emplacements choisis. De même, les largeurs des magasins peuvent être modifiées en fonction des dimensions des articles utilisés en changeant les emplacements de fixation des parois de ceux-ci sur le bâti de support. Comme déjà expliqué précédemment, la rotation de chaque article à éjecter par le dispositif d'éjection peut être très rapide et le poids d'une pile d'articles participe à l'éjection. Ainsi, il est possible en pratique d'obtenir une cadence d'éjection de 10 éjections d'articles par seconde pour des articles relativement minces, de l'ordre de 10 mm d'épaisseur, de 5 éjections par seconde pour des articles d'épaisseur moyenne, de l'ordre de 50 mm d'épaisseur, et de 2 éjections par seconde pour des articles relativement épais, par exemple d'au moins 100 mm d'épaisseur.

## Revendications

1. Dispositif d'éjection d'articles empilés (2) dans un magasin sensiblement vertical (1), comprenant un éjecteur (3) situé sous le magasin (1) de façon à éjecter du magasin (1) l'article le plus bas (2) de la pile d'articles, l'éjecteur (3) comprenant un support fixe (9) de l'article le plus bas (2) à surface supérieure plane horizontale comportant une ouverture centrale (11) à au moins deux bords rectilignes parallèles opposés (9b) d'étendue supérieure à la projection apparente horizontale de chaque article (2) et disposée obliquement relativement aux articles empilés (2) de façon que l'article le plus bas (2) repose sur au moins deux portions de surface plane (9c) du support (9) qui est distant du magasin (1) de façon que l'article le plus bas (2) soit complètement sorti du magasin (1) ; et un moyen de commande (12, 15) du pivotement sur lui-même de l'article le plus bas (2) reposant sur les portions de surface plane (9c) du support (9) à une position parallèle aux bords rectilignes (9b) de l'ouverture centrale (11) à travers laquelle cet article (2) tombe par gravité, **caractérisé en ce que** l'ouverture centrale (11) a uniquement deux bords rectilignes parallèles opposés de façon que l'article le plus bas (2) repose uniquement sur deux portions de surface plane (9c) du support (9) diagonalement opposées.

2. Dispositif selon la revendication 1, **caractérisé en ce qu'**il comprend un moyen (12) permettant de retenir dans le magasin (1) l'article (2) de la pile d'articles situé adjacent au-dessus de l'article le plus bas (2) de cette pile lorsque le moyen de commande (12, 15) provoque le pivotement sur lui-même de l'article le plus bas (2) et de libérer l'article adjacent (2) après éjection, par le moyen de commande, de l'article le plus bas (2) à travers l'ouverture centrale (11) du support (9) afin que l'article adjacent (2) puisse tomber par gravité en appui sur les deux portions de surface plane (9c) du support (9).

3. Dispositif selon la revendication 1 ou 2, **caractérisé en ce que** le support précité comprend deux bras rectilignes fixes parallèles sensiblement de même longueur (9) disposés obliquement par rapport aux articles empilés (2) dans le magasin (1) et dont leurs faces latérales verticales internes mutuellement en regard (9b) définissent respectivement les deux bords rectilignes opposés de l'ouverture (11) précitée et le moyen de commande (12, 15) comprend deux barres longitudinales parallèles sensiblement de même longueur (12) reliées entre elles à une extrémité par une biellette (13) de façon articulée et montées pivotante respectivement sur les deux bras de support (9) par un point intermédiaire (14) situé au même emplacement sur les deux barres (12), de telle façon que, lorsque les deux barres (12) sont parallèles aux deux bras de support (9), leurs faces latérales verticales internes mutuellement en regard (12a) soient respectivement en affleurement aligné avec les faces latérales verticales (9b) des deux bras de support (9) pour permettre la chute par gravité de l'article le plus bas (2) à travers l'ouverture centrale (11) et qu'en toute autre position pivotée et selon le sens de pivotement, les deux barres (12) laissent découvertes respectivement deux portions de surface plane (9c) des deux bras de support (9) correspondant aux deux portions précitées de support de l'article le plus bas (2), une portion de surface (9c) étant située d'un côté du pivot (14) d'une barre (12) tandis que l'autre portion de surface (9c), diagonalement opposée, est située de l'autre côté du pivot (14) de l'autre barre (12).

4. Dispositif selon les revendications 2 et 3, **caractérisé en ce que** le moyen de retenue et de libération précité est constitué par les deux barres pivotantes (12) qui sont montées sous le magasin (1) de façon qu'en pivotant vers leur position parallèle aux deux bras de support (9), l'article situé adjacent au-dessus de l'article le plus bas (2) soit maintenu dans le magasin (1) en appui par gravité sur deux portions de surface plane supérieure diagonalement opposées respectivement des deux barres pivotantes (12) et qu'en ramenant les deux barres pivotantes (12) à leur position oblique au-dessus des deux bras de support (9), l'article adjacent (2) tombe par gravité entre les deux barres pivotantes (12) pour venir en appui sur les deux portions de surface plane (9c) des deux bras de support (9).

5. Dispositif selon l'une des revendications précédentes, **caractérisé en ce que** le magasin (1) comprend deux parois latérales rigides (4) d'une largeur légèrement supérieure à la dimension des articles empilés (2) logés entre les deux plaques latérales (4) de façon à empêcher le pivotement sur eux-mêmes des articles empilés (2) lorsque le moyen de commande (12, 15) précité provoque le pivotement sur lui-même de l'article le plus bas (2).

6. Dispositif selon la revendication 5, **caractérisé en ce que** les deux parois latérales (4) du magasin (1) sont fixées amoviblement à un rail fixe (7) d'un bâti à des emplacements choisis de ce rail de façon à régler la largeur du magasin (1) en fonction de la taille des articles (2) à empiler dans le magasin (1).

7. Dispositif selon la revendication 5, **caractérisé en ce que** l'une des parois latérales (4) du magasin (1) est fixée amoviblement à un rail fixe (7) d'un bâti et l'autre paroi latérale (4) de celui-ci est montée mobile de façon commandée suivant une direction perpendiculaire à la paroi fixe (4) de façon à permettre son déplacement, à partir de sa position de formation du magasin (1), à une position éloignée de la paroi fixe (4) de réception d'une pile d'articles (2) et son retour vers la paroi fixe (4) pour charger la pile d'articles (2) sur les articles restants (2) du magasin (1).

8. Dispositif selon la revendication 7, **caractérisé en ce que** la paroi latérale mobile (4) du magasin (1) comprend une plaque (27) fixée à l'arrière de la paroi mobile (4), correspondant à l'arrière du magasin (1), perpendiculairement à l'extérieur de celle-ci et servant, lorsque la paroi mobile (4) est en position de formation du magasin (1), de butée de retenue de piles d'articles de stockage (2) successivement alignées en contact les unes avec les autres et reposant sur une voie de roulement (28) inclinée de haut en bas vers l'avant du magasin (1) et sensiblement parallèle aux parois (4) de ce magasin en s'étendant approximativement jusqu'à l'avant de celui-ci à un niveau permettant à la paroi mobile (4) ayant reçu une pile d'articles (2) de transférer cette pile de la partie correspondante de la voie de roulement (28) sur les articles restants (2) du magasin (1).

9. Dispositif selon la revendication 8, **caractérisé en ce que** la paroi latérale mobile (4) comprend également une autre plaque (31) fixée perpendiculairement à l'intérieur de celle-ci à un emplacement déterminée permettant à une pile d'articles (2), initialement retenue par la plaque fixe externe (27) de la paroi mobile (4) en position de formation du magasin (1), de venir en butée par glissement sur la voie de roulement (28) contre la plaque interne (31) de la paroi mobile (4), en position éloignée de la paroi fixe (4), à une position permettant le transfert de la pile d'articles (2) transversalement à la voie de roulement (28) vers la paroi fixe (4) du magasin (1) avec maintien concomitant, lors de ce transfert, des piles d'articles (2) stockées sur la voie de roulement (28) en appui contre la plaque externe (27) de la paroi mobile (4).

10. Dispositif selon la revendication 8 ou 9, **caractérisé en ce que** les piles d'articles (2) sont guidées bilatéralement sur la voie de roulement (28) qui comprend au moins une série de rouleaux montés fous parallèles et transversaux aux parois (4) du magasin (1).

11. Dispositif selon l'une des revendications 7 à 10, **caractérisé en ce que** la paroi mobile (4) est montée coulissante sur deux axes fixes parallèles de guidage (23) s'étendant au-dessus du magasin (1) transversalement aux parois (4) de celui-ci et le moyen de commande du déplacement de la paroi mobile (4) comprend un vérin (32) dont le cylindre (33) est fixe et la tige (35) est reliée articulée à la paroi mobile (4).

12. Dispositif selon l'une des revendications 3 à 11, **caractérisé en ce que** le moyen de commande du pivotement des deux barres pivotantes (12) comprend également un vérin (15) dont le cylindre (16) est fixe et la tige (19) est reliée articulée à l'une des deux barres pivotantes (12) à l'opposé de la biellette (13) de liaison de celles-ci.

13. Dispositif selon l'une des revendications 7 à 12, **caractérisé en ce qu'**il comprend un détecteur (37) monté sur la paroi mobile (4) du magasin (1) et fournissant un signal électrique destiné à commander le déplacement de la paroi mobile (4) pour le rechargement du magasin (1) en pile d'articles (2) lorsque le détecteur a détecté que la pile d'articles (2) dans le magasin (1) a atteint une hauteur limite inférieure.

14. Système de distribution automatique d'articles (2) pour la préparation d'une ou plusieurs commandes de tels articles, comprenant un certain nombre de magasins (1) contenant respectivement des piles d'articles (2) à distribuer, des dispositifs d'éjection (3) situés respectivement sous les magasins (1) pour éjecter de chaque magasin (1) l'article le plus bas (2) d'une pile correspondante d'articles et un convoyeur (4) disposé sous les dispositifs d'éjection (3) pour collecter les articles (2) délivrés par les dispositifs d'éjection (3) et les acheminer vers un emplacement de collecte, **caractérisé en ce que** chaque dispositif d'éjection (3) est tel que défini dans l'une quelconque des revendications 1 à 13.

15. Système selon la revendication 14, **caractérisé en ce qu'**il comprend un dispositif ordinateur permettant de sélectivement commander les dispositifs d'éjection (3) précités par l'intermédiaire de cartes électroniques (22) associées respectivement aux magasins (1) pour éjecter des magasins correspondants des quantités déterminées d'articles souhaités suivant des commandes passées et mémorisées dans le dispositif ordinateur.

16. Système selon la revendication 14 ou 15, **caractérisé en ce qu'**il comprend plusieurs couloirs parallèles de stockage de piles d'articles différents ou non (2) associés respectivement aux magasins (1) et comprenant chacun une voie de roulement (28) inclinée de haut en bas vers le magasin correspondant (1) de façon à diriger les piles successives d'articles (2) par glissement sur la voie de roulement (28) vers la paroi mobile (4) du magasin permettant le rechargement automatique de celui-ci.

## Patentansprüche

1. Auswurfvorrichtung für gestapelte Artikel (2) in einem deutlich vertikalen Magazin (1), umfassend einen Auswerfer (3), der sich derart unter dem Magazin (1) befindet, daß der unterste Artikel (2) des Artikelstapels aus dem Magazin (1) ausgeworfen wird, wobei der Auswerfer (3) einen festen Untersatz (9) des untersten Artikels (2) mit höherer, ebener, horizontaler Fläche umfaßt, umfassend eine zentrale Öffnung (11) mit wenigstens zwei geradlinigen parallelen einander gegenüberliegenden Seiten (9b) größerer Ausdehnung beim sichtbaren horizontalen Auswerfen jedes Artikels (2), und die im Verhältnis zu den gestapelten Artikeln (2) derart schräg angeordnet ist, daß der unterste Artikel (2) wenigstens auf zwei ebenen Flächenabschnitten (9c) des Untersatzes (9) aufliegt, der vom Magazin (1) derart entfernt ist, daß der unterste Artikel (2) vollständig aus dem Magazin (1) herauskommt; und ein Steuermittel (12, 15) des Schwenkens des untersten Artikels (2) um sich selbst, der auf den ebenen Flächenabschnitten (9c) des Untersatzes (9) in einer Position, die zu den geradlinigen Seiten (9b) der zentralen Öffnung (11) parallel ist, durch die dieser Artikel (2) durch Schwerkraft fällt, **dadurch gekennzeichnet, daß** die zentrale Öffnung (11) nur zwei geradlinige, parallele, einander gegenüberliegende Seiten derart hat, daß der unterste Artikel (2) lediglich auf zwei ebenen Flächenabschnitten (9c) des diagonal gegenüberliegenden Untersatzes (9) aufliegt.

2. Vorrichtung gemäß Anspruch 1, **dadurch gekennzeichnet, daß** sie ein Mittel (12) umfaßt, das das Zurückhalten des Artikels (2) des Artikelstapels im Magazin (1) erlaubt, der sich anliegend oberhalb des untersten Artikels (2) dieses Stapels befindet, wenn das Steuermittel (12, 15) das Schwenken des untersten Artikels (2) um sich selbst hervorruft, und das Freisetzen des anliegenden Artikels (2) nach dem Auswurf des untersten Artikels (2) durch die zentrale Öffnung (11) des Untersatze (9) über das Steuermittel erlaubt, damit der anliegende Artikel (2) durch Schwerkraft aufliegend auf die zwei ebenen Flächenabschnitte (9c) des Untersatzes (9) fällt.

3. Vorrichtung gemäß Anspruch 1 oder 2, **dadurch gekennzeichnet, daß** der vorgenannte Untersatz zwei geradlinige, feste, parallele Arme mit deutlich derselben Länge (9) umfaßt, die im Verhältnis zu den gestapelten Artikeln (2) schräg im Magazin (1) angeordnet sind und deren interne, vertikale, laterale, einander gegenüberliegende Seiten (9b) jeweils die zwei geradlinigen, einander gegenüberliegenden Seiten der vorgenannten Öffnung (11) definieren, und das Steuermittel (12, 15) umfaßt zwei parallele, längliche Stangen in deutlich derselben Länge (12), die untereinander an einem Ende durch einen Schwingarm (13) artikuliert verbunden sind und jeweils auf den zwei Stützarmen (9) durch einen Zwischenpunkt (14) schwenkend angebracht sind, der sich an derselben Stelle auf den zwei Stangen (12) derart befindet, daß, wenn die zwei Stangen (12) parallel zu den zwei Stützarmen (9) sind, ihre internen, vertikalen lateralen, einander gegenüberliegenden Seiten (12a) jeweils genau aufliegend in einer Flucht mit den vertikalen, lateralen Seiten (9b) der zwei Stützarme (9) sind, um den Fall des untersten Artikels (2) durch Schwerkraft durch die zentrale Öffnung (11) zu erlauben und damit die zwei Arme (12) in jeder anderen geschwenkten Position und gemäß der Schwenkrichtung jeweils zwei ebene Flächenabschnitte (9c) der zwei Stützarme (9) freilassen, die den zwei vorgenannten Stützabschnitten des untersten Artikels (2) entsprechen, wobei ein Flächenabschnitt (9c) sich auf einer Seite des Drehpunktes (14) einer Stange (12) befindet, während sich der andere Flächenabschnitt (9c) schräg gegenüber auf der anderen Seite des Drehpunktes (14) der anderen Stange (12) befindet.

4. Vorrichtung gemäß Anspruch 2 und 3, **dadurch gekennzeichnet, daß** das vorgenannte Mittel zum Zurückhalten und Freisetzen aus den zwei schwenkenden Stangen (12) gebildet wird, die unter dem Magazin (1) derart angebracht sind, daß beim Schwenken in ihre zu den zwei Stützarmen (9) parallele Position, der sich anliegend oberhalb des untersten Artikels (2) befindende Artikel im Magazin (1) durch Schwerkraft aufliegend auf zwei ebenen, oberen, schrägen, jeweils den zwei Schwenkarmen (12) gegenüberliegenden Flächenabschnitten gehalten wird und daß beim Zurückholen der zwei Schwenkarme (12) in ihre schräge Position oberhalb der zwei Stützarme (9) der anliegende Artikel (2) durch Schwerkraft zwischen die zwei schwenkenden Stangen (12) fällt, um auf den zwei ebenen Flächenabschnitten (9c) der zwei Stützarme (9) aufzuliegen.

5. Vorrichtung gemäß einem der vorgenannten Ansprüche, **dadurch gekennzeichnet, daß** das Magazin (1) zwei feste, laterale Wände (4) mit einer Breite umfaßt, die leicht über der Abmessung der gestapelten Artikel (2) liegt, die sich zwischen den zwei lateralen Wänden (4) befinden, derart, daß das Schwenken der gestapelten Artikel (2) um sich selbst verhindert, wird wenn das vorgenannte Steuermittel (12, 15) das Schwenken des untersten Artikels (2) um sich selbst hervorruft.

6. Vorrichtung gemäß Anspruch 5, **dadurch gekennzeichnet, daß** die zwei lateralen Wände (4) des Magazins abnehmbar an einer festen Schiene (7) eines Tragelements an ausgewählten Stellen dieser Schiene derart befestigt sind, daß die Breite des Magazins (1) in Abhängigkeit von der Größe der im Magazin (1) zu stapelnden Artikel (2) eingestellt wird.

7. Vorrichtung gemäß Anspruch 5, **dadurch gekennzeichnet, daß** eine der lateralen Wände (4) des Magazins (1) abnehmbar auf einer festen Schiene (7) eines Tragelements befestigt ist und daß die andere laterale Wand (4) desselben mobil gesteuert gemäß einer zur festen Wand (4) senkrechten Richtung derart angebracht ist, daß ihr Verschieben ausgehend von ihrer Bildungsposition des Magazins (1) in eine entfernte Position der festen Wand (4) zur Aufnahme eines Stapels von Artikeln (2) und ihre Rückkehr zur festen Wand (4) zum Laden des Stapels von Artikeln (2) auf den restlichen Artikeln (2) des Magazins (1) erlaubt wird.

8. Vorrichtung gemäß Anspruch 7, **dadurch gekennzeichnet, daß** die mobile laterale Wand (4) des Magazins (1) eine Platte (27) umfaßt, die hinten an der mobilen Wand (4) befestigt wird, die dem hinteren Teil des Magazins (1) entspricht, welche senkrecht an der Außenseite derselben ist und, wenn die mobile Wand (4) in der Bildungsposition des Magazins (1) ist, als Rückhalteanschlag der gestapelten Artikelstapel (2) dient, die nacheinander einander anliegend aufgereiht werden und auf einer Laufbahn (28) aufliegen, die von oben nach unten nach vorne des Magazins (1) gerichtet geneigt und deutlich parallel zu den Wänden (4) dieses Magazins ist, wobei sie sich ungefähr bis zur Vorderseite desselben in einer Höhe erstreckt, die es der einen Stapel Artikel (2) erhaltenen mobilen Wand (4) erlaubt, diesen Stapel vom entsprechenden Teil der Laufbahn (28) auf die restlichen Artikel (2) des Magazins (1) zu transferieren.

9. Vorrichtung gemäß Anspruch 8, **dadurch gekennzeichnet, daß** die mobile laterale Wand (4) auch eine andere Platte (31) umfaßt, die senkrecht im Inneren derselben an einer vorbestimmten Stelle befestigt ist, die es einem Stapel von Artikeln (2), der ursprünglich von der externen festen Platte (27) der mobilen Wand (4) in Bildungsposition des Magazins (1) festgehalten wurde erlaubt, durch Gleiten auf der Laufbahn (28) gegen die interne Platte (31) der mobilen Wand (4) in entfernter Position der festen Wand (4) in einer Position zum Anschlag zu kommen, die den Transfer des Stapels von Artikeln (2) quer zur Laufbahn (28) zur festen Wand (4) des Magazins (1) unter gleichzeitigem Festhalten der Stapel von Artikeln (2) bei diesem Transfer erlaubt, die auf der Laufbahn (28) aufliegend gegen die externe Platte (27) der mobilen Wand (4) gelagert sind.

10. Vorrichtung gemäß Anspruch 8 oder 9, **dadurch gekennzeichnet, daß** die Stapel von Artikeln (2) bilateral auf der Laufbahn (28) geführt werden, die wenigstens eine Serie von parallelen, beweglich und quer zu den Wänden (4) des Magazins (1) angebrachten Rollen umfaßt.

11. Vorrichtung gemäß Anspruch 7 bis 10, **dadurch gekennzeichnet, daß** die mobile Wand (4) gleitend auf den zwei parallelen, festen Führungsachsen (23) aufgebaut ist, die sich oberhalb des Magazins (1) quer zu den Wänden (4) desselben erstrecken, und das Steuermittel der Verschiebung der mobilen Wand (4) umfaßt einen Zylinder (32), dessen Walze (33) fest ist, und der Stift (35) ist artikuliert mit der mobilen Wand (4) verbunden.

12. Vorrichtung gemäß Anspruch 3 bis 11, **dadurch gekennzeichnet, daß** das Steuermittel des Schwenkens der zwei Schwenkarme (12) ebenfalls einen Zylinder (15) umfaßt, dessen Walze (16) fest ist, und der Stift (19) ist artikuliert mit einem der schwenkenden Stangen (12) gegenüber des Schwenkarms (13) zur Verbindung derselben verbunden.

13. Vorrichtung gemäß Anspruch 7 bis 12, **dadurch gekennzeichnet, daß** sie einen Sensor (37) umfaßt, der auf der mobilen Wand (4) des Magazins (1) angebracht ist und ein elektrisches Signal liefert, das dazu bestimmt ist, die Verschiebung der mobilen Wand (4) zur erneuten Bestückung des Magazins (1) mit Stapeln von Artikeln (2) zu steuern, wenn der Sensor festgestellt hat, daß der Stapel von Artikeln (2) im Magazin (1) eine untere Grenzhöhe erreicht hat.

14. Automatisches Vertriebssystem von Artikeln (2) für die Vorbereitung einer oder mehrerer Aufträge derartiger Artikel, umfassend eine bestimmte Anzahl Magazine (1), die jeweils Stapel von zu vertreibenden Artikeln (2), Auswurfvorrichtungen (3), die sich jeweils unter den Magazinen (1) zum Auswerfen des untersten Artikels (2) eines Stapels von entsprechenden Artikeln aus jedem Magazin (1) befinden, und einen Förderer (4) umfassen, der unter den Auswurfvorrichtungen (3) zum Auffangen der durch die Auswurfvorrichtungen (3) ausgelieferten Artikel (2) und zu ihrer Verbringung zu den Sammelstellen angeordnet ist, **dadurch gekennzeichnet, daß** jede Auswurfvorrichtung (3) derart ist, wie sie in einem der vorgenannten Ansprüche 1 bis 13 definiert wird.

15. System gemäß Anspruch 14, **dadurch gekennzeichnet, daß** es eine Computervorrichtung umfaßt, die die selektive Steuerung der vorgenannten Auswurfvorrichtungen (3) mittel elektronischer Karten (22) steuert, die jeweils den Magazinen (1) zugeordnet sind, um aus den entsprechenden Magazinen die bestimmten Mengen an gewünschten Artikeln gemäß den erteilten und in der Computervorrichtung gespeicherten Aufträgen auszuwerfen.

16. System gemäß Anspruch 14 oder 15, **dadurch gekennzeichnet, daß** es mehrere parallele Gänge zur Lagerung von Stapeln von verschiedenen oder nicht verschiedenen Artikeln (2) umfaßt, die jeweils den Magazinen (1) zugeordnet sind, und umfassend jeweils eine Laufbahn (28), die von oben nach unten zum entsprechenden Magazin (1) derart geneigt ist, daß die aufeinanderfolgenden Stapel von Artikeln (2) durch Gleiten auf der Laufbahn (28) zur mobilen Wand (4). des Magazins gelenkt werden, was die automatische erneute Bestückung desselben erlaubt.

## Claims

1. Ejection device for articles (2) stacked in a substantially vertical magazine (1), comprising an ejector (3) located in the magazine (1) in order to eject the lowest article (2) of the stack of articles from the magazine (1), the ejector (3) comprising a fixed support (9) for the lowest article (2) with a horizontal flat upper surface comprising a central aperture (11) with at least two opposite parallel rectilinear edges (9b) of an extent greater than the horizontal apparent projection of each article (2) and arranged obliquely with respect to the stacked articles (2) so that the lowest article (2) is supported on at least two flat surface portions (9c) of the support (9) which is distant from the magazine (1) so that the lowest article (2) is completely out of the magazine (1); and control means (12, 15) for pivoting on itself the lowest article (2) supported by the flat surface portions (9c) of the support (9) at a position which is parallel to the rectilinear edges (9b) of the central aperture (11) through which this article (2) falls per gravity, **characterized in that** the central aperture (11) has only two opposite parallel rectilinear edges so that the lowest article (2) is only supported by two diagonally opposed flat surface portions (9c) of the support (9).

2. Device according to Claim 1, **characterized in that** it comprises a means (12) enabling to retain, in the magazine (1), the article (2) of the stack of articles located adjacent above the lowest article (2) of this stack when the control means (12, 15) causes a pivoting on itself of the lowest article (2), and to release the adjacent article (2) after ejection of the lowest article (2) by the control means through the central aperture (11) of the support (9) in order that the adjacent article (2) may fall per gravity by being supported by the two flat surface portions (9c) of the support (9)

3. Device according to Claim 1 or 2, **characterized in that** the pre-mentioned support comprises two parallel fixed rectilinear arms substantially of a same length (9) arranged obliquely with respect to the stack of articles (2) in the magazine (1) and of which their mutually opposite inner vertical lateral surfaces (9b) define respectively the two opposed rectilinear edges of the above-mentioned aperture (11), and the control means (12, 15) comprises two parallel longitudinal bars substantially of the same length (12) connected together at one end by means of an articulated rod (13) pivotally mounted on the two support arms (9), respectively, by an intermediate point (14) located at the same place on the two bars (12), so that, when the two bars (12) are parallel to the two support arms (9), their inner mutually opposite vertical lateral surfaces (12a) are flushingly aligned with the vertical lateral surfaces (9b) of the two support arms (9), respectively, for enabling the lowest article (2) to fall per gravity through the central aperture (11), and so that in any other pivoted position and according to the pivoting direction, the two bars (12) encover two flat surface portions (9c) of the two support arms (9) respectively corresponding to the two pre-mentioned support portions of the lowest article (2), a surface portion (9c) being located on one side of the pivot (14) of a bar (12) while the other surface (9c), diagonally opposite, is located on the other side of the pivot (14) of the other bar (12).

4. Device according to Claims 2 and 3, **characterized in that** the pre-mentioned retaining and releasing means is formed by the two pivoting bars (12) which are mounted under the magazine (1) so that, by pivoting to their position which is parallel to the two support arms (9), the article located adjacent above the lowest article (2) is maintained in the magazine (1) by being supported per gravity by two upper diagonally opposed flat surface portions of the two pivoting bars (12), respectively, and **in that**, by bringing the two pivoting bars (12) back to their oblique position above the two support arms (9), the adjacent article (2) falls per gravity between the two pivoting bars (12) for being supported by the two flat surface portions (9c) of the two support arms (9).

5. Device according to one of the preceding Claims, **characterized in that** the magazine (1) comprises two rigid lateral walls (4) of a width slightly greater than the size of the stacked articles (2) housed between the two lateral plates (4) so as to prevent the pivoting on themselves of the stacked articles (2) when the pre-mentioned control means (12, 15) causes the pivoting on itself of the lower article (2).

6. Device according to Claim 5, **characterized in that** the two lateral walls (4) of the magazine (1) are removably fixed to a fixed rail (7) of a frame at chosen places of this rail in order to adjust the width of the magazine (1) in function of the size of the articles (2) to be stacked in the magazine (1).

7. Device according to Claim 5, **characterized in that** one of the lateral walls (4) of the magazine (1) is removably fixed to a fixed rail (7) of a frame and the other lateral wall (4) thereof is movably mounted in a control way according to a direction perpendicular to the fixed wall (4) in order to permit its displacement, from its position for forming the magazine (1), to a position distant from the fixed receiving wall (4) of a stack of articles (2) and its return to the fixed wall (4) for loading the stack of articles (2) on the remaining articles (2) of the magazine (1).

8. Device according to Claim 7, **characterized in that** the movable lateral wall (4) of the magazine (1) comprises a plate (27) fixed to back of the movable wall (4), corresponding to back of the magazine (1), perpendicularly to the outside thereof and being used, when the movable wall (4) is in the position for forming the magazine (1), as an abutment for retaining the stacks of stored articles (2) successively aligned into contact one with the other and being supported by a running path (28) which is inclined from top to bottom frontwardly of the magazine (1) and substantially parallel to the walls (4) of this magazine by extending substantially up to the front thereof at a level permitting the movable wall (4) having received a stack of articles (2) to transfer this stack from the corresponding portion of the running path (28) onto the remaining articles (2) of the magazine (1).

9. Device according to Claim 8, **characterized in that** the movable lateral wall (4) comprises also another plate (31) which is perpendicularly fixed within the same at a determined place enabling a stack of articles (2), initially retained by the outer fixed plate (27) of the movable wall (4) in the position for forming the magazine (1), to come into abutment by sliding on the running path (28) against the inner plate (31) of the movable wall (4), in a position distant from the fixed wall (4), to a position enabling the transfer of the stack of articles (2) transversally to the running path (28) towards the fixed wall (4) of the magazine (1) while concomitantly maintaining, upon this transfer, the stacks of articles (2) stored on the running path (28) by being supported by the outer plate (27) of the movable wall (4).

10. Device according to Claim 8 or 9, **characterized in that** the stacks of articles (2) are bilaterally guided on the running path (28) which comprises at least one set of loosely mounted rollers which are parallel and transversal to the walls (4) of the magazine (1).

11. Device according to one of Claims 7 to 10, **characterized in that** the movable wall (4) is slidably mounted on two guiding parallel fixed spindles (23) extending above the magazine (1) transversally to the walls (4) thereof, and the control means for controlling the displacement of the movable wall (4) comprises a jack (32), the cylinder (33) of which is fixed and the rod (35) is articulated to the movable wall (4).

12. Device according to one of Claims 3 to 11, **characterized in that** the control means for pivoting the two pivoting bars (12) comprises also a jack (15) the cylinder (16) of which is fixed and the rod (19) is articulated to one of the two pivoting bars (12) at the opposite of the connecting rod (13) thereof.

13. Device according to one of Claims 7 to 12, **characterized in that** it comprises a detector (37) arranged on the movable wall (4) of the magazine (1) and providing an electrical signal designed to control the displacement of the movable wall (4) for a new loading of the magazine (1) with stack of articles (2) when the detector has detected that the stack of articles (2) in the magazine (1) has reached a lower limit height.

14. Automatic distribution system for articles (2) in preparing one or a plurality of orders of such articles, comprising a given number of magazine (1) respectively containing stacks of articles (2) to be distributed, ejection devices (3) respectively placed under the magazines (1) for ejecting the lowest article (2) of a corresponding stack of articles from each magazine (1) and a conveyor (4) arranged under the ejection devices (3) for collecting the articles (2) as delivered by the ejection devices (3) and dispatching them to a collecting place, **characterized in that** each ejection device (3) is such as defined in any one of Claims 1 to 13.

15. System according to Claim 14, **characterized in that** it comprises a computing device enabling to selectively control the pre-mentioned ejection device (3) by means of electronic cards (22) respectively associated to the magazines (1) for ejecting determined amounts of desired articles from the corresponding magazines according to orders as passed and memorized in the computing device.

16. System according to Claim 14 or 15, **characterized in that** it comprises a plurality of parallel corridors for storing stacks of articles which are different or not (2), respectively associated with the magazines (1) and each comprising a running path (28) which is inclined from top to bottom towards the corresponding magazine (1) in order to direct the successive stacks of articles (2) by sliding on the running path (28) towards the movable wall (4) of the magazine permitting the automatic reloading thereof.
